Europäisches Patentamt

European Patent Office

Office européen des brevets

(19)

(11) Veröffentlichungsnummer: **0 298 256**
**B1**

(12) **EUROPÄISCHE PATENTSCHRIFT**

(45) Veröffentlichungstag der Patentschrift: **09.01.91**

(21) Anmeldenummer: **88108875.1**

(22) Anmeldetag: **03.06.88**

(51) Int. Cl.⁵: **B 29 C 45/63**, B 29 C 45/53

(54) **Beschickungsvorrichtung für Spritzgiessmaschinen.**

(30) Priorität: **13.06.87 DE 3719886**

(43) Veröffentlichungstag der Anmeldung:
**11.01.89 Patentblatt 89/02**

(45) Bekanntmachung des Hinweises auf die
Patenterteilung:
**09.01.91 Patentblatt 91/02**

(84) Benannte Vertragsstaaten:
**DE FR GB**

(56) Entgegenhaltungen:
**DE-A-2 707 623**
**DE-A-3 634 306**
**FR-A-1 064 777**
**FR-A-1 259 020**

(73) Patentinhaber: **Sauerbruch, Ernst F.**
**Gewerbestrasse 31**
**D-7702 Gottmadingen (DE)**

(72) Erfinder: **Sauerbruch, Ernst F.**
**Gewerbestrasse 31**
**D-7702 Gottmadingen (DE)**

(74) Vertreter: **Kornaker, Benno**
**Weihungstrasse 8**
**D-7900 Ulm 10 (DE)**

Courier Press, Leamington Spa, England.

## Beschreibung

Die Erfindung betrifft eine Beschickungsvorrichtung für Spritzgießmaschinen, insbesondere zur Polyesterverarbeitung, mit einem Beschickungszylinder, in den das zu verarbeitende Material eingebracht und mit Hilfe eines Stopfkolbens dem Plastifizieraggregat der Spritzgießmaschine zugeführt wird, wobei eine Vorrichtung zum Entlüften des Beschickungszylinders vorgesehen ist.

Bei den Spritzgießmaschinen dieser Art wird eine dosierte Menge der zu verarbeitenden Polyestermasse bei zurückgezogenem Stopfkolben durch eine Einfüllöffnung in den Beschickungszylinder eingebracht. Je nach Füllzustand kann dabei der Luftanteil im Zylinderraum beträchtlich groß sein. Beim Zufahren des Stopfkolbens wird dann die eingeschlossene Luft sehr stark komprimiert und erhitzt (Dieseleffekt). Es kann deshalb zu Verbrennungen der Polyestermasse kommen, wenn die Luft aus dem Beschickungszylinder nicht eliminiert wird. Verbrennungen der Polyestermasse haben zur Folge, daß die Spritzgießteile bei der anschließenden Formgebung unbrauchbar werden.

Es ist bereits bekannt, bei einer Vorrichtung entsprechend dem Oberbegriff in der Zylinderwandung des Beschickungszylinders eine Entlüftungsbohrung anzubringen, durch welche die im Zylinder eingeschlossene Luft entweichen kann. Dabei ist oftmals die Entlüftungsbohrung mit einem Anschluß für ein Vakuumventil versehen, um die Luft aus dem Zylinderraum herauszusaugen.

Nachteilig bei der bekannten Ausführung ist, daß die Entlüftungsbohrung an einer bestimmten, ortsfesten Stelle des Beschickungszylinders angebracht ist. Befindet sich im Zylinderraum wenig Polyestermasse, so besteht die Gefahr, daß der Stopfkolben die Entlüftungsbohrung überfährt und keine genügende Entlüftung gewährleistet ist. In diesem Fall kann es wiederum zu den bereits erwähnten Verbrennungen der Polyestermasse infolge der Luftverdichtung durch den Stopfkolben kommen. Außerdem muß der Stopfkolben, bevor er die Entlüftungsbohrung erreicht hat, seine Stopfbewegung für den Entlüftungsvorgang unterbrechen, weil sonst die Entlüftungsbohrung zu rasch überfahren wird und keine ausreichende Entlüftung erfolgen kann. Dies bedeutet einen Zeitverlust des Nachladevorganges, durch den die Zykluszeit nachteilig beeinflußt wird. Um eine ausreichende Entlüftung zu gewährleisten, ist oftmals zusätzlich eine Vakuumpumpe erforderlich. Durch die unterschiedliche Lage der Polyestermasse im Zylinderraum besteht auch eine erhebliche Verstopfungsgefahr der Entlüftungsbohrung, so daß ein komplizierter Reinigungsvorgang erforderlich ist, wenn Polyestermasse in die Entlüftungsbohrung eingedrungen ist. Ein weiterer Nachteil besteht darin, daß während der Rückzugbewegung des Stopfkolbens im Zylinderraum ein Vakuum entsteht, bis der Stopfkolben die Entlüftungsbohrung erreicht hat.

Der Erfindung liegt die Aufgabe zugrunde, bei einer Beschickungsvorrichtung der eingangs erwähnten Art den Entlüftungsvorgang im Beschickungszylinder während der Stopf- und Rückzugbewegung des Stopfkolbens zu verbessern und die genannten Nachteile zu vermeiden, um dadurch die Qualität und die Rentabilität des Spritzvorganges zu steigern.

Diese Aufgabe wird gemäß der Erfindung dadurch gelöst, daß bei der bekannten Vorrichtung der Stopfkolben eine Entlüftungsöffnung aufweist, die zu einem bestimmten Zeitpunkt während der Stopf- und Rückzugbewegung des Stopfkolbens verschlossen oder freigegeben werden kann.

Nach einem weiteren Merkmal der Erfindung ist das Schließen und Öffnen der Entlüftungsöffnung in Abhängigkeit vom Füllungsgrad des Beschickungszylinders steuerbar. Dadurch ist gewährleistet, daß die Entlüftungsöffnung erst dann verschlossen wird, wenn der Stopfkolben die Luft aus dem Beschickungszylinder größtenteils verdrängt hat.

Um zu verhindern, daß bei der Rückzugbewegung des Stopfkolbens ein Vakuum im Beschickungszylinder entsteht, wird die Entlüftungsöffnung zu Beginn der Rückzugbewegung des Stopfkolbens wieder freigegeben.

Vorteilhafterweise ist das Schließen und die Freigabe der Entlüftungsöffnung druckabhängig steuerbar.

In einer anderen Ausführungsform der Erfindung ist das Schließen und die Freigabe der Entlüftungsöffnung zeitabhängig steuerbar.

Eine vorteilhafte Ausführungsform der Erfindung ist dadurch gekennzeichnet, daß der Entlüftungsöffnung ein axial verschiebbarer Schließkolben zugeordnet ist, der sich in der Öffnungsstellung außerhalb und in der Schließstellung innerhalb der Entlüftungsöffnung befindet.

Damit die Entlüftungsöffnung freigegeben werden kann, ist der Schließkolben außerhalb der Entlüftungsöffnung in einer zu dieser koaxialen Lagerbohrung des Stopfkolbens axial verschiebbar gelagert.

Der Antrieb des Schließkolbens zum Schließen und zur Freigabe der Entlüftungsöffnung erfolgt dadurch, daß der Schließkolben über eine Stange mit einem doppeltwirkenden Steuerkolben verbunden ist, der in einem hydraulischen oder pneumatischen Antriebszylinder geführt ist.

Zur Steuerung des Schließ- und Öffnungsvorganges der Entlüftungsöffnung ist der am Stopfkolben ortsfest angeordnete Antriebszylinder über flexible Schlauchleitungen mit einem Steuergerät verbunden.

Nach einem weiteren Merkmal der Erfindung ist das Steuergerät mit einem in der Druckleitung des Stopfkolbenantriebes angeordneten Druckschalter verbunden.

Die mit der Erfindung erzielten Vorteile bestehen insbesondere darin, daß der Entlüftungsvorgang dem Füllzustand und Füllungsgrad des Beschickungszylinders angepaßt werden kann. Dadurch wird eine effektivere Entlüftung erzielt.

Es erfolgt keine Zyklenverlängerung, da nicht kurzzeitig, sondern je nach Füllungsgrad während eines größeren Teils der Kolbenbewegung entlüftet wird. Außerdem erfolgt bei jedem Stopfzyklus gleichzeitig eine Reinigung der Entlüftungsöffnung durch den Schließkolben. Ein weiterer Vorteil besteht darin, daß die Luft während der Rückzugbewegung des Stopfkolbens durch die freigegebene Entlüftungsöffnung sofort eintreten kann und somit kein Vakuum entsteht. Dadurch bleibt weniger Masse am Kolbenboden hängen.

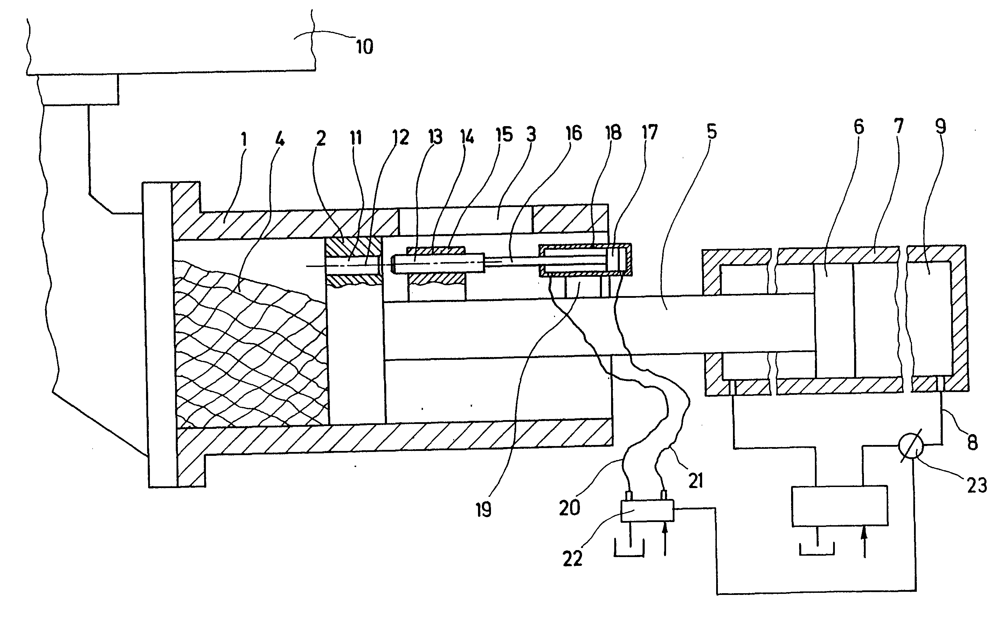

Die Erfindung ist in der folgenden Beschreibung und der Zeichnung, die ein Ausführungsbeispiel darstellt, näher erläutert. Die einzige Figur der Zeichnung zeigt die Beschickungsvorrichtung gemäß der Erfindung im Längssschnitt.

In einem Beschickungszylinder 1 einer nicht näher dargestellten Spritzgießmaschine ist ein Stopfkolben 2 längsbeweglich geführt. Über eine in der Wandung des Beschickungszylinders 1 angeordnete Einfüllöffnung 3 wird die Polyestermasse 4 in den Beschickungszylinder 1 eingebracht. Der Stopfkolben 2 ist über eine Kolbenstange 5 mit einem Antriebskolben 6 verbunden, der in einem Hydraulikzylinder 7 geführt ist. Bei Zuführung des Druckmediums über die Druckleitung 8 in den Zylinderraum 9 des Hydraulikzylinders 7 wird der Stopfkolben 2 zugefahren und drückt die Polyestermasse 4 in ein Plastifizieraggregat 10 der Spritzgießmaschine.

Der Stopfkolben 2 weist eine parallel zur Längsachse des Beschickungszylinders 1 liegende Entlüftungsöffnung 11 in Form einer zylindrischen Bohrung auf. In Verlängerung der Längsmittelachse 12 der Entlüftungsöffnung 11 ist ein Schließkolben 13 angeordnet, dessen Durchmesser dem Bohrungsdurchmesser der Entlüftungsöffnung 11 entspricht. Der Schließkolben 13 ist in einer Lagerbohrung 14 eines mit dem Stopfkolben 2 fest verbundenen Trägers 15 axial verschiebbar gelagert. Über eine Stange 16 ist der Schließkolben 13 mit einem Steuerkolben 17 verbunden, der in einem Antriebszylinder 18 geführt ist. Der Antriebszylinder 18 ist über einen Steg 19 mit der Kolbenstange 5 des Stopfkolbens 2 fest verbunden. Dem hydraulisch oder pneumatisch wirkenden Antriebszylinder 18 wird das Druckmedium über flexible Schlauchleitungen 20 und 21 zugeführt. Die Schlauchleitungen 20 und 21 führen zu einem Steuergerät 22, das mit einem in der Druckleitung 8 des Hydraulikzylinders 7 angeordneten Druckschalter 23 gekoppelt ist.

Beim Zufahren des Stopfkolbens 2 ist die Entlüftungsöffnung 11 vom Schließkolben 13 freigegeben, so daß die im Beschickungszylinder 1 eingeschlossene Luft entweichen kann. Nach einer gewissen Zeitspanne, die vom Füllungsgrad des Beschickungszylinders 1 abhängt, baut sich mit dem Einschieben der Polyestermasse 4 in das Plastifizieraggregat 10 im Zylinderraum 9 des Hydraulikzylinders 7 in zunehmendem Maße ein Druck auf. Bei Erreichen eines bestimmten Grenzwertes, bei dem die Luft aus dem Beschickungszylinder 1 größtenteils eliminiert ist, wird über den Druckschalter 23 das Steuergerät 22 angesteuert und über die Schlauchleitung 21 der Antriebskolben 17 des Schließkolbens 13 in Bewegung gesetzt. Der Schließkolben 13 fährt nach vorne in die Entlüftungsöffnung 11 des Stopfkolbens 2 ein und verschließt diese. Ist bereits Polyestermasse in die Entlüftungsöffnung 11 eingedrungen, so wird sie durch das Einfahren des Schließkolbens 13 wieder zurückgedrängt und die Entlüftungsöffnung 11 gereinigt.

Bei Beginn der Rückzugbewegung des Stopfkolbens 2 wird der Schließkolben 13 vom Steuergerät 22 aus wieder in die andere Richtung bewegt und die Entlüftungsöffnung 11 sofort freigegeben. Dadurch kann durch die Entlüftungsöffnung 11 Luft in den Beschickungszylinder 1 eintreten, so daß die Entstehung eines Vakuums verhindert wird.

Anstelle der druckabhängigen Steuerung des Schließkolbens 13 kann auch eine zeitabhängige Steuerung mit bekannten Bauelementen vorgesehen werden.

**Patentansprüche**

1. Beschickungsvorrichtung für Spritzgießmaschinen, insbesondere zur Polyesterverarbeitung, mit einem Beschickungszylinder, in den das zu verarbeitende Material eingebracht und mit Hilfe eines Stopfkolbens dem Plastifizieraggregat der Spritzgießmaschine zugeführt wird, wobei eine Vorrichtung zum Entlüften des Beschickungszylinder vorgesehen ist, dadurch gekennzeichnet, daß der Stopfkolben (2) eine Entlüftungsöffnung (11) aufweist, die zu einem bestimmten Zeitpunkt während der Stopf- und Rückzugbewegung des Stopfkolbens (2) verschlossen oder freigegeben werden kann.

2. Beschickungsvorrichtung nach Anspruch 1, dadurch gekennzeichnet, daß das Schließen der Entlüftungsöffnung (11) während der Stopfbewegung des Stopfkolbens (2) in Abhängigkeit vom Füllungsgrad des Beschickungszylinders (1) steuerbar ist.

3. Beschickungsvorrichtung nach Anspruch 2, dadurch gekennzeichnet, daß die Entlüftungsöffnung (11) zu Beginn der Rückzugbewegung des Stopfkolbens (2) wieder freigegeben wird.

4. Beschickungsvorrichtung nach einem der Ansprüche 1 bis 3, dadurch gekennzeichnet, daß das Schließen und die Freigabe der Entlüftungsöffnung (11) druckabhängig steuerbar ist.

5. Beschickungsvorrichtung nach einem der Ansprüche 1 bis 3, dadurch gekennzeichnet, daß das Schließen und die Freigabe der Entlüftungsöffnung (11) zeitabhängig steuerbar ist.

6. Beschickungsvorrichtung nach einem der Ansprüche 1 bis 5, dadurch gekennzeichnet, daß der Entlüftungsöffnung (11) ein axial verschiebbarer Schließkolben (13) zugeordnet ist, der sich in der Öffnungsstellung außerhalb und in der Schließstellung innerhalb der Entlüftungsöffnung (11) befindet und diese verschließt.

7. Beschickungsvorrichtung nach einem der Ansprüche 1 bis 6, dadurch gekennzeichnet, daß der Schließkolben (13) außerhalb der Entlüftungsöffnung (11) in einer zu dieser koaxialen Lagerbohrung (14) des Stopfkolbens (2) axial verschiebbar gelagert ist.

8. Beschickungsvorrichtung nach einem der Ansprüche 1 bis 6, dadurch gekennzeichnet, daß der Schließkolben (13) über eine Stange (16) mit einem doppeltwirkenden Steuerkolben (17) verbunden ist, der in einem hydraulischen oder pneumatischen Antriebszylinder (18) geführt ist.

9. Beschickungsvorrichtung nach Anspruch 8, dadurch gekennzeichnet, daß der Antriebszylinder (18) am Stopfkolben (2) fest angeordnet ist und über flexible Schlauchleitungen (20, 21) mit einem Steuergerät (22) verbunden ist.

10. Beschickungsvorrichtung nach Anspruch 8 oder 9, dadurch gekennzeichnet, daß das Steuergerät (22) mit einem in der Druckleitung (8) des Stopfkolbenantriebes (6, 7) angeordneten Druckschalter (23) verbunden ist.

## Revendications

1. Dispositif d'alimentation d'une machine de moulage par injection, essentiellement pour le traitement de polyester, avec un cylindre de chargement dans lequel le matériau est introduit et acheminé dans le groupe de ramollissement de la presse d'injection à l'aide d'un piston à bourrer, un dispositif pour l'aération du cylindre de chargement étant prévu, caractérisé en ce que le piston de bourrage (2) est muni d'une ouverture d'aération (11) pouvant être fermée ou débloquée à un moment donné pendant le mouvement de bourrage et de retour du piston de bourrage (2).

2. Dispositif d'alimentation selon la revendication 1, caractérisé en ce que la fermeture de l'ouverture d'aération (11) peut être commandeé pendant le mouvement de bourrage du piston (2) en fonction du degré de remplissage du cylindre de chargement (1).

3. Dispositif d'alimentation selon la revendication 2, caractérisé en ce que l'ouverture d'aération (11) est à nouveau débloqué au début du mouvement de retour du piston de bourrage (2).

4. Dispositif d'alimentation selon les revendications 1 à 3, caractérisé en ce que la fermeture et le déblocage de l'ouverture d'aération (11) peuvent être commandés en fonction de la pression.

5. Dispositif d'alimentation selon l'une des revendications 1 à 3, caractérisé en ce que la fermeture et le déblocage de l'ouverture d'aération (11) peut être commandé en fonction du temps.

6. Dispositif d'alimentation selon l'une des revendications 1 à 5, caractérisé en ce que un piston d'obturation (13) déplaçable axialement est coordonné à l'ouverture d'aération (11) et qui se trouve en position d'ouverture à l'extérieur et en position de fermeture à l'intérieur de l'ouverture d'aération (11).

7. Dispositif d'alimentation selon l'une des revendications 1 à 6 caractérisé en ce que le piston d'obturation (13) est logé en dehors de l'ouverture d'aération (11) de façon axialement déplaçable dans un palier de roulement coaxial (14) du piston de bourrage (2).

8. Dispositif d'alimentation selon l'une des revendications 1 à 6 caractérisé en ce que le piston d'obturation (13) est relié à travers une tige (16) avec un piston de commande à double effet (17) entraîné dans un cylindre de commande hydraulique ou pneumatique (18).

9. Dispositif d'alimentation selon la revendication 8, caractérisé en ce que le cylindre de commande (18) est disposé à demeure sur le piston be bourrage (2) et relié avec un appareil de commande (22) à travers des flexibles (20, 21).

10. Dispositif d'alimentation selon la revendication 8 ou 9 caractérisé en ce que l'appareil de commande (22) est relié à un interrupteur pression (23) disposé dans la conduite de pression (8) de la commande du piston de bourrage (6, 7).

## Claims

1. A feeding device for injection molding machines, in particular for polyester processing, comprising a feed cylinder for receiving the material to be processed which is then fed to the plasticizing unit of the injection molding machine with the aid of a feed ram, and comprising means for venting the feed cylinder, characterized in that the feed ram (2) is provided with a vent opening (11) arranged for being closed or released at a predetermined point in time during the feeding and return motions of the feed ram (2).

2. A feeding device according to Claim 1, characterized in that the closing of the vent opening (11) can be controlled during the feeding motion of the feed ram (2) in response to the filling level in the feed cylinder (1).

3. A feeding device according to Claim 2, characterized in that the vent opening (11) is released again at the beginning of the return motion of the feed ram (2).

4. A feeding device according to any of Claims 1 to 3, characterized in that the closing and releasing of the vent opening (11) can be pressure-controlled.

5. A feeding device according to any of Claims 1 to 3, characterized in that the closing and releasing of the vent opening (11) can be time-controlled.

6. A feeding device according to any of Claims 1 to 5, characterized in that the vent opening (11) coacts with a closing ram (13) which can be displaced in axial direction and which in the opening position is located outside the vent opening (11) while in the closing position it is located inside the vent opening (11) so as to close the latter.

7. A feeding device according to any of Claims 1 to 6, characterized in that the closing ram (13) is mounted outside the vent opening (11) for axial displacement in a receiving bore (14) in the feed ram (2) which extends coaxially to the vent opening (11).

8. A feeding device according to any of Claims 1 to 6, characterized in that the closing ram (13) is connected via a rod (16) to a double-acting control piston (17) guided in a hydraulic or pneumatic actuating cylinder (18).

9. A feeding device according to Claim 8, characterized in that the actuating cylinder (18) is fixed to the feeding ram (2) and connected to a control unit (22) via flexible hose lines (20, 21).

10. A feeding device according to Claim 8 or 9, characterized in that the control unit (22) is connected to a pressure switch (23) arranged in the pressure line (8) of the feeding ram actuating mechanism (6, 7).

10

1  4  2  11  12  13  14  15  3  16  18  17  5  6  7  9

19  20  21

22  23

8

EP 0 298 256 B1